# NEW EUROPEAN PATENT SPECIFICATION

(11) **EP 2 438 135 B2**
(45) Date of publication and mention of the opposition decision: **13.03.2019**
(45) Mention of the grant of the patent: 02.03.2016
(21) Application number: 10724947.6
(22) Date of filing: 03.06.2010
(51) Int. Cl.: C09K 5/04

(54) **CHILLER APPARATUS CONTAINING CIS-1,1,1,4,4,4-HEXAFLUORO-2 BUTENE AND METHODS OF PRODUCING COOLING THEREIN**
KÜHLVORRICHTUNG MIT CIS-1,1,1,4,4,4-HEXAFLUOR-2-BUTEN UND VERFAHREN ZUR ERZEUGUNG VON KÜHLUNG DARIN
APPAREIL RÉFRIGÉRANT CONTENANT LE CIS-1,1,1,4,4,4-HEXAFLUORO-2-BUTÈNE ET PROCÉDÉS DE PRODUCTION D'UN REFROIDISSEMENT À L'INTÉRIEUR DE CELUI-CI

(30) Priority: 03.06.2009 US 183671 P
(43) Date of publication of application: 11.04.2012
(73) Proprietor: The Chemours Company FC, LLC, Wilmington DE 19801 (US)
(72) Inventor: MINOR, Barbara, Haviland, Elkton Maryland 21921 (US); KONTOMARIS, Konstantinos, Wilmington , Delaware 19808 (US); LECK, Thomas, J., Hockessin Delaware 19707 (US)
(74) Representative: Dehns
(86) International application number: PCT/US2010/037185
(87) International publication number: WO 2010/141669

(56) References cited:
- WO-A1-2009/114398
- WO-A1-2011/034929
- WO-A2-2007/002625
- WO-A2-2008/134061
- WO-A2-2011/084447
- WO-A2-2011/084553
- US-A1- 2006 245 944
- US-A1- 2007 108 403
- HAAF S ET AL: "Ullmann's Encyclopedia of Industrial Chemistry, passage" 15 July 2000 (2000-07-15), ULLMANN'S ENCYCLOPEDIA OF INDUSTRIAL CHEMISTRY, JOHN WILEY & SONS, INC, WEINHEIM LNKD- DOI:10.1002/14356007.B03_19, PAGE(S) 1 - 43 , XP002572156 points 1.1.2, 1.1.4
- "DupontTM Suva® 123 in Chillers", DuPont, 2005, pages 1-6, XP055329924,
- Dennis L. O'Neal et al: "Chapter 62- Refrigeration" In: Myer Kutz: "Mechanical Engineer's Handbook", 1998, John Wiley & Sons, XP055329927, ISBN: 0471130079 pages 1879-1897,
- "Chapter 9, 10&13" In: S. WANG: "Handbook of Air conditionning and refrigeration", 7 November 2000 (2000-11-07), XP055329930, ISBN: 0070681678
- E.F. KEUPER: "Performance characteristics of R-11, R-123 and R-245ca in direct drive low pressure chillers", International Compressor Engineering Conference , paper 1194, 1996, pages 749-754, XP055329931,
- "The global environmental benefit from the use of HCFC-123 in centrifugal chiller", Trane A business of American Standard Companies United States of America, 5 September 2007 (2007-09-05), pages 1-17, XP055329936,

## Description

### BACKGROUND OF THE INVENTION

### 1. Field of the Invention.

The present disclosure relates to the field of refrigerants for use in air conditioning or refrigeration equipment. In particular, the present disclosure relates to refrigerants for use in centrifugal chillers including flooded evaporator chillers or direct expansion chiller systems.

### 2. Description of Related Art.

Working fluids for various applications are being sought that have little if any environmental impact. The hydrochlorofluorocarbon (HCFC) and hydrofluorocarbon (HFC) working fluids adopted as replacements for chlorofluorocarbon (CFC) working fluids, have lower or no ozone depletion potential (ODP), but have been found to contribute to global warming. Additionally, the HCFCs will finally reach the phase out deadline set by the Montreal Protocol due to ODP. With regulations coming in force soon based on global warming potential, even the HFCs, with zero ODP will not be environmentally acceptable working fluids.

Therefore, replacements are sought for the CFCs, HCFCs, and HFCs currently in use as refrigerants, heat transfer fluids, cleaning solvents, aerosol propellants, foam blowing agents and fire extinguishing or suppression agents. US 2007/0108403 describes a broad variety of fluoroolefin compositions useful as refrigerants or heat transfer fluids.

In order to serve as drop-in replacements in existing equipment, replacements must be close to or match the properties of the original working fluid for which the equipment was designed. It would be desirable to identify compositions that provide a balance of properties that will allow replacement of existing refrigerants and also to serve as refrigerants in new equipment designed for similar applications.

In searching for a replacement for 2,2-dichloro-1,1,1-trifluoroethane, (HCFC-123) in particular in chiller applications, it would be desirable to consider unsaturated fluorocarbons. The unsaturated fluorocarbons have zero ODP and significantly lower GWP than the existing refrigerants in use today.

### SUMMARY OF THE INVENTION

Cis-1,1,1,4,4,4-hexafluoro-2-butene has been found to provide cooling performance within the required parameters (meaning good energy efficiency and reasonable cooling capacity), and to have low GWP, zero ODP, and be non-flammable.

Therefore, in accordance with one embodiment of the present invention, disclosed herein is a centrifugal chiller apparatus containing a refrigerant consisting of cis-HFO-1336mzz.

In another embodiment, disclosed is a method for producing cooling as defined in claim 6 comprising evaporating cis-HFO-1336mzz in the vicinity of a body to be cooled, and thereafter condensing said cis-HFO-1336mzz.

In another embodiment, disclosed is a method for producing cooling in a a centrifugal chiller as defined in claim 4, comprising passing a cooling medium through an evaporator, evaporating cis-HFO-1336mzz in the evaporator, to form a vapor, thereby cooling the cooling medium, and passing the cooling medium out of the evaporator to a body to be cooled.

In another embodiment, disclosed is a method to produce cooling as defined in claim 7 comprising evaporating cis-HFO-1336mzz liquid to produce cis-HFO-1336mzz vapor in the vicinity of a body to be cooled; compressing said cis-HFO-1336mzz vapor to produce higher pressure cis-HFO-1336mzz vapor; and thereafter condensing said higher pressure cis-HFO-1336mzz vapor to produce cis-HFO-1336mzz liquid, wherein said compressing is accomplished in a centrifugal compressor.

In another embodiment, disclosed is a method for replacing HCFC-123 in a chiller, wherein said centrifugal chiller comprises a centrifugal compressor, said method comprising providing a refrigerant consisting of cis-HFO-1336mzz to said flooded evaporator chiller or direct expansion chiller in place of HCFC-123.

In another embodiment, disclosed is a method for replacing CF-11 in a chiller, wherein said centrifugal chiller comprises a centrifugal compressor, said method comprising providing a refrigerant consisting of cis-HFO-1336mzz to said flooded evaporator chiller, direct expansion chiller or closed loop heat transfer system in place of CFC-11.

### BRIEF DESCRIPTION OF THE DRAWINGS

Figure 1 is a schematic diagram of one embodiment of a flooded evaporator chiller which utilizes cis-HFO-1336mzz.
Figure 2 is a schematic diagram of one embodiment of a direct expansion evaporator chiller which utilizes cis-HFO-1336mzz.

### DETAILED DESCRIPTION OF THE PREFERRED EMBODIMENTS

Before addressing details of embodiments described below, some terms are defined or clarified.

Global warming potential (GWP) is an index for estimating relative global warming contribution due to atmospheric emission of a kilogram of a particular greenhouse gas compared to emission of a kilogram of carbon dioxide. GWP can be calculated for different time horizons showing the effect of atmospheric lifetime for a given gas. The GWP for the 100 year time horizon is commonly the value referenced.

Ozone depletion potential (ODP) is defined in "The Scientific Assessment of Ozone Depletion, 2002, A report of the World Meteorological Association's Global Ozone Research and Monitoring Project," section 1.4.4, pages 1.28 to 1.31 (see first paragraph of this section). ODP represents the extent of ozone depletion in the stratosphere expected from a compound on a mass-for-mass basis relative to fluorotrichloromethane (CFC-11).

Refrigeration capacity (sometimes referred to as cooling capacity) is a term to define the change in enthalpy of a refrigerant in an evaporator per pound of refrigerant circulated, or the heat removed by the refrigerant in the evaporator per unit volume (volumetric capacity). The refrigeration capacity is a measure of the ability of a refrigerant or heat transfer composition to produce cooling. Therefore, the higher the capacity, the greater the cooling that is produced. Cooling rate refers to the heat removed by the refrigerant in the evaporator per unit time.

Coefficient of performance (COP) is the amount of heat removed divided by the required energy input to operate the cycle. The higher the COP, the higher the energy efficiency. COP is directly related to the energy efficiency ratio (EER), that is, the efficiency rating for refrigeration or air conditioning equipment at a specific set of internal and external temperatures.

As used herein, a heat transfer system may be any refrigeration system, refrigerator, air conditioning system, air conditioner, heat pump, chiller, and the like utilizing a heat transfer composition.

As used herein, a heat transfer composition, heat transfer fluid or cooling medium comprises a composition used to carry heat from a heat source to a heat sink or to transfer cooling from a chiller to a body to be cooled.

As used herein, a refrigerant comprises a compound or mixture of compounds that function as a heat transfer composition in a cycle wherein the composition undergoes a phase change from a liquid to a gas and back in a repeating cycle.

Flammability is a term used to mean the ability of a composition to ignite and/or propagate a flame. For refrigerants and other heat transfer compositions, the lower flammability limit ("LFL") is the minimum concentration of the heat transfer composition in air that is capable of propagating a flame through a homogeneous mixture of the composition and air under test conditions specified in ASTM (American Society of Testing and Materials) E681-2001. The test data indicates if the composition is flammable in the liquid phase or in the vapor phase present in a closed container above the liquid at specified temperatures (as designated by ASHRAE (American Society of Heating, Refrigerating and Air-Conditioning Engineers) in ASHRAE Standard 34-2007). In order to be classified by ASHRAE as non-flammable, a refrigerant must be non-flammable under the conditions of ASTM E681-2001 as formulated in both the liquid and vapor phase as well as during leakage scenarios. For a single component refrigerant, the leakage scenarios cannot change the composition and therefore will not be a factor in determining flammability. For many refrigeration and air conditioning applications, the refrigerant or working fluid is required to be non-flammable.

As used herein, the terms "comprises," "comprising," "includes," "including," "containing", "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

Also, use of "a" or "an" are employed to describe elements and components described herein. This is done merely for convenience and to give a general sense of the scope of the invention. This description should be read to include one or at least one and the singular also includes the plural unless it is obvious that it is meant otherwise.

Unless otherwise defined, all technical and scientific terms used herein have the same meaning as commonly understood by one of ordinary skill in the art to which this invention belongs. Although methods and materials similar or equivalent to those described herein can be used in the practice or testing of embodiments of the present invention, suitable methods and materials are described below. All publications, patent applications, patents, and other references mentioned herein are incorporated by reference in their entirety, unless a particular passage is cited. In case of conflict, the present specification, including definitions, will control. In addition, the materials, methods, and examples are illustrative only and not intended to be limiting.

The present disclosure provides a centrifugal chiller apparatus containing a refrigerant consisting of cis-1,1,1,4,4,4-hexafluoro-2-butene.

The present disclosure further provides methods for producing cooling in such centrifugal chiller systems utilizing cis-1,1,1,4,4,4-hexafluoro-2-butene as refrigerant. Cis-1,1,1,4,4,4-hexafluoro-2-butene has been found to provide cooling performance in chillers within the required parameters (meaning good energy efficiency and reasonable cooling capacity), and to have low GWP, zero ODP, and be non-flammable.

Cis-1,1,1,4,4,4-hexafluoro-2-butene, also known as cis-HFO-1336mzz may be made by methods known in the art, such as described in U.S. Patent Application Publication No. US 2009/0012335 A1, by hydrodechlorination of 2,3-dichloro-1,1,1,4,4,4-hexafluoro-2-butene.

HFO-1336mzz exists as one of two configurational isomers, cis- and trans-. In samples of either "pure" isomer, there will exist some level of the other isomer. As used herein, cis-HFO-1336mzz is intended to refer to the pure cis-isomer and any mixture of the two configuration isomers that is primarily cis-HFO-1336mzz, with the majority of the remainder of the composition comprising trans-HFO-1336mzz. By a mixture that is primarily cis-HFO-1336mzz is meant a mixture of cis-HFO-1336mzz and trans-HFO-1336mzz, wherein the cis-HFO-1336mzz is present as at least 50 weight percent of the composition.

Additionally, cis-HFO-1336mzz as used in chiller apparatus may further contain non-refrigerant additives, such as lubricants, tracers, stabilizers, compatibilizers, dyes, solubilizing agents, perfluoropolyethers, and the like, or mixtures of said non-refrigerant additives.

The GWP for cis-HFO-1336mzz has been estimated from atmospheric lifetime to be <10 for the 100 year time horizon. Thus cis-HFO-1336mzz provides a low GWP refrigerant as a replacement for HCFC-123 or CFC-11 in chiller equipment (see example for comparison).

In one embodiment, cis-HFO-1336mzz as disclosed herein may be used in combination with a desiccant in a refrigeration, air-conditioning, or heat pump system to aid in removal of moisture. Desiccants may be composed of activated alumina, silica gel, or zeolite-based molecular sieves. Representative molecular sieves include MOLSIV XH-7, XH-6, XH-9 and XH-11 (UOP LLC, Des Plaines, IL).

In one embodiment, cis-HFO-1336mzz as disclosed herein may be used in combination with at least one lubricant selected from the group consisting of polyalkylene glycols, polyol esters, polyvinylethers, mineral oils, alkylbenzenes, synthetic paraffins, synthetic napthenes, and poly(alpha)olefins.

In one embodiment, lubricants may comprise those suitable for use with refrigeration or air-conditioning apparatus. Among these lubricants are those conventionally used in vapor compression refrigeration apparatus utilizing chlorofluorocarbon refrigerants. In one embodiment, lubricants comprise those commonly known as "mineral oils" in the field of compression refrigeration lubrication. Mineral oils comprise paraffins (i.e., straight-chain and branched-carbon-chain, saturated hydrocarbons), naphthenes (i.e. cyclic paraffins) and aromatics (i.e. unsaturated, cyclic hydrocarbons containing one or more rings characterized by alternating double bonds). In one embodiment, lubricants comprise those commonly known as "synthetic oils" in the field of compression refrigeration lubrication. Synthetic oils comprise alkylaryls (i.e. linear and branched alkyl alkylbenzenes), synthetic paraffins and naphthenes, and poly(alphaolefins). Representative conventional lubricants are the commercially available BVM 100 N (paraffinic mineral oil sold by BVA Oils), napthenic mineral oil commercially available from Crompton Co. under the trademarks Suniso^{®} 3GS and Suniso^{®} 5GS, naphthenic mineral oil commercially available from Pennzoil under the trademark Sontex^{®} 372LT, napthenic mineral oil commercially available from Calumet Lubricants under the trademark Calumet^{®} RO-30, linear alkylbenzenes commercially available from Shrieve Chemicals under the trademarks Zerol^{®} 75, Zerol^{®} 150 and Zerol^{®} 500, and HAB 22 (branched alkylbenzene sold by Nippon Oil).

In another embodiment, lubricants may also comprise those, which have been designed for use with hydrofluorocarbon refrigerants and are miscible with refrigerants of the present invention under compression refrigeration and air-conditioning apparatus' operating conditions. Such lubricants include, but are not limited to, polyol esters (POEs) such as Castrol® 100 (Castrol, United Kingdom), polyalkylene glycols (PAGs) such as RL-488A from Dow (Dow Chemical, Midland, Michigan), polyvinyl ethers (PVEs), and polycarbonates (PCs).

Lubricants used with cis-HFO-1336mzz are selected by considering a given compressor's requirements and the environment to which the lubricant will be exposed.

In one embodiment, cis-HFO-1336mzz as disclosed herein may further comprise an additive selected from the group consisting of compatibilizers, UV dyes, solubilizing agents, tracers, stabilizers, perfluoropolyethers (PFPE), and functionalized perfluoropolyethers.

In one embodiment, cis-HFO-1336mzz may be used with about 0.01 weight percent to about 5 weight percent of a stabilizer, free radical scavenger or antioxidant. Such other additives include but are not limited to, nitromethane, hindered phenols, hydroxylamines, thiols, phosphites, or lactones. Single additives or combinations may be used.

Optionally, in another embodiment, certain refrigeration or air-conditioning system additives may be added, as desired, to cis-HFO-1336mzz in order to enhance performance and system stability. These additives are known in the field of refrigeration and air-conditioning, and include, but are not limited to, anti wear agents, extreme pressure lubricants, corrosion and oxidation inhibitors, metal surface deactivators, free radical scavengers, and foam control agents. In general, these additives may be present in the inventive compositions in small amounts relative to the overall composition. Typically concentrations of from less than about 0.1 weight percent to as much as about 3 weight percent of each additive are used. These additives are selected on the basis of the individual system requirements. These additives include members of the triaryl phosphate family of EP (extreme pressure) lubricity additives, such as butylated triphenyl phosphates (BTPP), or other alkylated triaryl phosphate esters, e.g. Syn-0-Ad 8478 from Akzo Chemicals, tricresyl phosphates and related compounds. Additionally, the metal dialkyl dithiophosphates (e.g., zinc dialkyl dithiophosphate (or ZDDP), Lubrizol 1375 and other members of this family of chemicals may be used in compositions of the present invention. Other antiwear additives include natural product oils and asymmetrical polyhydroxyl lubrication additives, such as Synergol TMS (International Lubricants). Similarly, stabilizers such as antioxidants, free radical scavengers, and water scavengers may be employed. Compounds in this category can include, but are not limited to, butylated hydroxy toluene (BHT), epoxides, and mixtures thereof. Corrosion inhibitors include dodeceyl succinic acid (DDSA), amine phosphate (AP), oleoyl sarcosine, imidazone derivatives and substituted sulfphonates. Metal surface deactivators include areoxalyl bis (benzylidene) hydrazide (CAS reg no. 6629-10-3), N,N'-bis(3,5-di-tert-butyl-4-hydroxyhydrocinnamoylhydrazine (CAS reg no. 32687-78-8), 2,2,'-oxamidobis-ethyl-(3,5-di-tert-butyl-4-hydroxyhydrocinnamate (CAS reg no. 70331-94-1), N,N'-(disalicyclidene)-1,2-diaminopropane (CAS reg no. 94-91-7) and ethylenediaminetetra-acetic acid (CAS reg no. 60-00-4) and its salts, and mixtures thereof.

Additional additives include stabilizers comprising at least one compound selected from the group consisting of hindered phenols, thiophosphates, butylated triphenylphosphorothionates, organo phosphates, or phosphites, aryl alkyl ethers, terpenes, terpenoids, epoxides, fluorinated epoxides, oxetanes, ascorbic acid, thiols, lactones, thioethers, amines, nitromethane, alkylsilanes, benzophenone derivatives, aryl sulfides, divinyl terephthalic acid, diphenyl terephthalic acid, ionic liquids, and mixtures thereof. Representative stabilizer compounds include but are not limited to tocopherol; hydroquinone; t-butyl hydroquinone; monothiophosphates; and dithiophosphates, commercially available from Ciba Specialty Chemicals, Basel, Switzerland, hereinafter "Ciba," under the trademark Irgalube^{®} 63; dialkylthiophosphate esters, commercially available from Ciba under the trademarks Irgalube^{®} 353 and Irgalube^{®} 350, respectively; butylated triphenylphosphorothionates, commercially available from Ciba under the trademark Irgalube^{®} 232; amine phosphates, commercially available from Ciba under the trademark Irgalube^{®} 349 (Ciba); hindered phosphites, commercially available from Ciba as Irgafos^{®} 168; a phosphate such as (Tris-(di-tert-butylphenyl), commercially available from Ciba under the trademark Irgafos^{®} OPH; (Di-n-octyl phosphite); and iso-decyl diphenyl phosphite, commercially available from Ciba under the trademark Irgafos^{®} DDPP; anisole; 1,4-dimethoxybenzene; 1,4-diethoxybenzene; 1,3,5-trimethoxybenzene; d-limonene; retinal; pinene; menthol; Vitamin A; terpinene; dipentene; lycopene; beta carotene; bornane; 1,2-propylene oxide; 1,2-butylene oxide; n-butyl glycidyl ether; trifluoromethyloxirane; 1,1-bis(triftuoromethyl)oxirane; 3-ethyl-3-hydroxymethyl-oxetane, such as OXT-101 (Toagosei Co., Ltd); 3-ethyl-3-((phenoxy)methyl)-oxetane, such as OXT-211 (Toagosei Co., Ltd); 3-ethyl-3-((2-ethyl-hexyloxy)methyl)-oxetane, such as OXT-212 (Toagosei Co., Ltd); ascorbic acid; methanethiol (methyl mercaptan); ethanethiol (ethyl mercaptan); Coenzyme A; dimercaptosuccinic acid (DMSA); grapefruit mercaptan ((R)-2-(4-methylcyclohex-3-enyl)propane-2-thiol)); cysteine ((R)-2-amino-3-sulfanyl-propanoic acid); lipoamide (1,2-dithiolane-3-pentanamide); 5,7-bis(1,1-dimethylethyl)-3-[2,3(or 3,4)-dimethylphenyl]-2(3H)-benzofuranone, commercially available from Ciba under the trademark Irganox® HP-136; benzyl phenyl sulfide; diphenyl sulfide; diisopropylamine; dioctadecyl 3,3'-thiodipropionate, commercially available from Ciba under the trademark Irganox^{®} PS 802 (Ciba); didodecyl 3,3'-thiopropionate, commercially available from Ciba under the trademark Irganox^{®} PS 800; di-(2,2,6,6-tetramethyl-4-piperidyl)sebacate, commercially available from Ciba under the trademark Tinuvin^{®} 770; poly-(N-hydroxyethyl-2,2,6,6-tetramethyl-4-hydroxy-piperidyl succinate, commercially available from Ciba under the trademark Tinuvin^{®} 622LD (Ciba); methyl bis tallow amine; bis tallow amine; phenol-alpha-naphthylamine; bis(dimethylamino)methylsilane (DMAMS); tris(trimethylsilyl)silane (TTMSS); vinyltriethoxysilane; vinyltrimethoxysilane; 2,5-difluorobenzophenone; 2',5'-dihydroxyacetophenone; 2-aminobenzophenone; 2-chlorobenzophenone; benzyl phenyl sulfide; diphenyl sulfide; dibenzyl sulfide; ionic liquids; and others.

Ionic liquid stabilizers comprise at least one ionic liquid. Ionic liquids are organic salts that are liquid at room temperature (approximately 25° C). In another embodiment, ionic liquid stabilizers comprise salts containing cations selected from the group consisting of pyridinium, pyridazinium, pyrimidinium, pyrazinium, imidazolium, pyrazolium, thiazolium, oxazolium and triazolium; and anions selected from the group consisting of [BF₄]-, [PF₆]-, [SbF₆]-, [CF₃SO₃]-, [HCF₂CF₂SO₃]-, [CF₃HFCCF₂SO₃]-, [HCClFCF_{Z}SO₃]-, [(CF₃SO₂)₂N]-, [(CF₃CF₂SO₂)₂N]-, [(CF₃SO₂)₃C]-, [CF₃CO₂]-, and F-. Representative ionic liquid stabilizers include emim BF₄ (1-ethyl-3-methylimidazolium tetrafluoroborate); bmim BF₄ (1-butyl-3-methylimidazolium tetraborate); emim PF₆ (1-ethyl-3-methylimidazolium hexafluorophosphate); and bmim PF₆ (1-butyl-3-methylimidazolium hexafluorophosphate), all of which are available from Fluka (Sigma-Aldrich).

In one embodiment, the cis-HFO-1336mzz as disclosed herein may be used with a perfluoropolyether additive. A common characteristic of perfluoropolyethers is the presence of perfluoroalkyl ether moieties. Perfluoropolyether is synonymous to perfluoropolyalkylether. Other synonymous terms frequently used include "PFPE", "PFAE", "PFPE oil", "PFPE fluid", and "PFPAE". For example, a perfluoropolyether, having the formula of CF₃-(CF₂)₂-O-[CF(CF₃)-CF₂-O]j'-R'f, is commercially available from DuPont under the trademark Krytox^{®} In the formula, j' is 2 - 100, inclusive and R'f is CF₂CF₃, a C3 to C6 perfluoroalkyl group , or combinations thereof.

Other PFPEs, commercially available from Ausimont of Milan, Italy, under the trademarks Fomblin^{®} and Galden^{®}, and produced by perfluoroolefin photooxidation, can also be used. PFPE commercially available under the trademark Fomblin^{®}-Y can have the formula of CF₃O(CF₂CF(CF₃)-O-)_{m'}(CF₂-O-)_{n'}-R_{1f}. Also suitable is CF₃O[CF₂CF(CF₃)O]_{m'}(CF₂CF₂O)_{o'}(CF₂O)_{n'}-R_{1f}. In the formulae R_{1f} is CF₃, C₂F₅, C₃F₇, or combinations of two or more thereof; (m' + n') is 8 - 45, inclusive; and m/n is 20 - 1000, inclusive; o' is 1; (m'+n'+o') is 8 - 45, inclusive; m'/n' is 20 - 1000, inclusive.

PFPE commercially available under the trademark Fomblin^{®}-Z can have the formula of CF₃O(CF₂CF₂-O-)_{p'}(CF2-O)_{q'}CF₃ where (p' + q') is 40 - 180 and p'/q' is 0.5 - 2, inclusive.

Another family of PFPE, commercially available under the trademark Demnum™ from Daikin Industries, Japan, can also be used. It can be produced by sequential oligomerization and fluorination of 2,2,3,3-tetrafluorooxetane, yielding the formula of F-[(CF₂)₃-O]_{t'}-R_{2f} where R_{2f} is CF₃, C₂F₅, or combinations thereof and t' is 2 - 200, inclusive.

The two end groups of the perfluoropolyether, independently, can be functionalized or unfunctionalized. In an unfunctionalized perfluoropolyether, the end group can be branched or straight chain perfluoroalkyl radical end groups. Examples of such perfluoropolyethers can have the formula of C_{r'}F_{(2r'+1)}-A-C_{r'}F_{(2r'+1)} in which each r' is independently 3 to 6; A can be O-(CF(CF₃)CF₂-O)_{w'}, O-(CF₂-O)_{x'}(CF₂CF₂-O)_{y'}, O-(C₂F₄-O)_{w'}, O-(C₂F₄-O)_{x'}(C₃F₆-O)_{y'}, O-(CF(CF₃)CF₂-O)_{x'}(CF₂-O)_{y'}, O-(CF₂CF₂CF₂-O)_{w'}, O-(CF(CF₃)CF₂-O)_{x'}(CF₂CF₂-O)_{y'}-(CF₂-O)_{z'}, or combinations of two or more thereof; preferably A is O-(CF(CF₃)CF₂-O)_{w'}, O-(C₂F₄-O)_{w'}, O-(C₂F₄-O)_{x'}(C₃F₆-O)_{y'}, O-(CF₂CF₂CF₂-O)_{w'}, or combinations of two or more thereof; w' is 4 to 100; x' and y' are each independently 1 to 100. Specific examples include, but are not limited to, F(CF(CF₃)-CF₂-O)₉-CF₂CF₃, F(CF(CF₃)-CF₂-O)₉-CF(CF₃)₂, and combinations thereof. In such PFPEs, up to 30% of the halogen atoms can be halogens other than fluorine, such as, for example, chlorine atoms.

The two end groups of the perfluoropolyether, independently, can also be functionalized. A typical functionalized end group can be selected from the group consisting of esters, hydroxyls, amines, amides, cyanos, carboxylic acids and sulfonic acids.

Representative ester end groups include -COOCH₃, -COOCH₂CH₃, -CF₂COOCH₃, -CF₂COOCH₂CH₃, -CF₂CF₂COOCH₃, -CF₂CF₂COOCH₂CH₃, -CF₂CH₂COOCH₃, -CF₂CF₂CH₂COOCH₃, -CF₂CH₂CH₂COOCH₃, -CF₂CF₂CH₂CH₂COOCH₃.

Representative hydroxyl end groups include -CF₂OH, -CF₂CF₂OH, -CF₂CH₂OH, -CF₂CF₂CH₂OH, -CF₂CH₂CH₂OH, -CF₂CF₂CH₂CH₂OH.

Representative amine end groups include -CF₂NR¹R², -CF₂CF₂NR¹R², -CF₂CH₂NR¹R², -CF₂CF₂CH₂NR¹R², -CF₂CH₂CH₂NR¹R², -CF₂CF₂CH₂CH₂NR¹R², wherein R¹ and R² are independently H, CH₃, or CH₂CH₃.

Representative amide end groups include -CF₂C(O)NR¹R², -CF₂CF₂C(O)NR¹R², -CF₂CH₂C(O)NR¹R², -CF₂CF₂CH₂C(O)NR¹R², -CF₂CH₂CH₂C(O)NR¹R², -CF₂CF₂CH₂CH₂C(O)NR¹R², wherein R¹ and R² are independently H, CH₃, or CH₂CH₃.

Representative cyano end groups include -CF₂CN, -CF₂CF₂CN, -CF₂CH₂CN, -CF₂CF₂CH₂CN, -CF₂CH₂CH₂CN, -CF₂CF₂CH₂CH₂CN.

Representative carboxylic acid end groups include -CF₂COOH, -CF₂CF₂COOH, -CF₂CH₂COOH, -CF₂CF₂CH₂COOH, -CF₂CH₂CH₂COOH, -CF₂CF₂CH₂CH₂COOH.

Representative sulfonic acid end groups include -S(O)(O)OR³, -S(O)(O)R⁴, -CF₂C S(O)(O)OR³, -CF₂CF₂O S(O)(O)OR³, -CF₂CH₂OS(O)(O)OR³, -CF₂CF₂CH₂OS(O)(O)OR³, -CF₂CH₂CH₂OS(OHO)OR³, -CF₂CF₂CH₂CH₂O S(O)(O)OR³, -CF₂S(O)(O)OR³, -CF₂CF₂S(O)(O)OR³, -CF₂CH₂S(O)(O)OR³, -CF₂CF₂CH₂S(O)(O)OR³, -CF₂CH₂CH₂ S(O)(O)OR³, -CF₂CF₂CH₂CH₂S(O)(O)OR³, -CF₂OS(O)(O)R⁴, -CF₂CF₂OS(O)(O)R⁴, -CF₂CH₂OS(O)(O)R⁴, -CF₂CF₂CH₂OS(O)(O)R⁴, -CF₂CH₂CH₂OS(O)(O)R⁴, -CF₂CF₂CH₂CH₂OS(O)(O)R⁴, wherein R³ is H, CH₃, CH₂CH₃, CH₂CF₃, CF₃, or CF₂CF₃, R⁴ is CH₃, CH₂CH₃, CH₂CF₃, CF₃,

### Chillers

In one embodiment, is provided a centrifugal chiller apparatus containing cis-HFO-1336mzz. In one embodiment, the chiller apparatus is a flooded evaporator chiller. In one embodiment, the chiller apparatus is a direct expansion chiller.

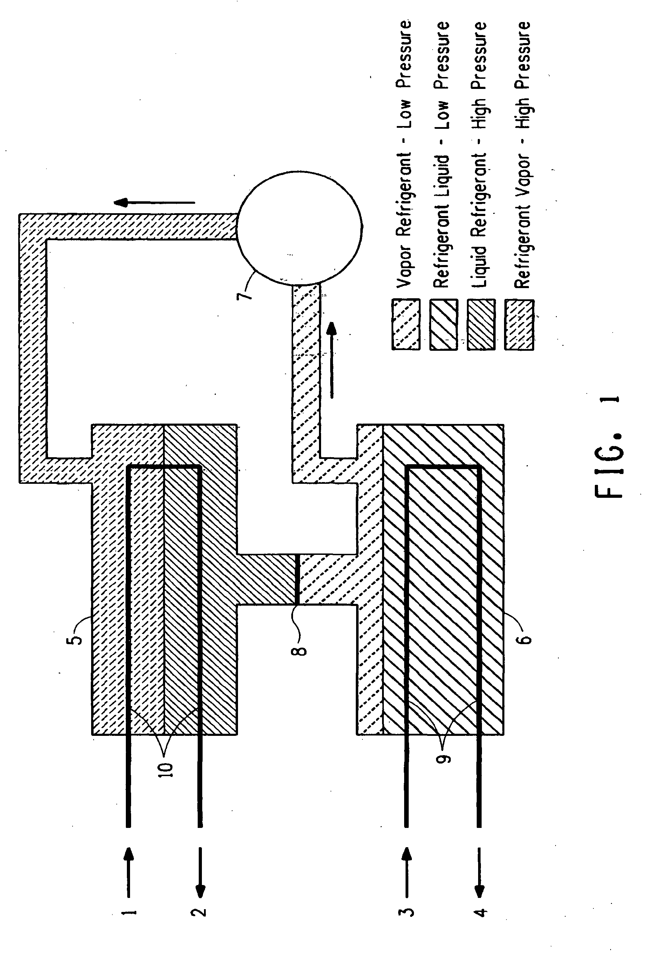

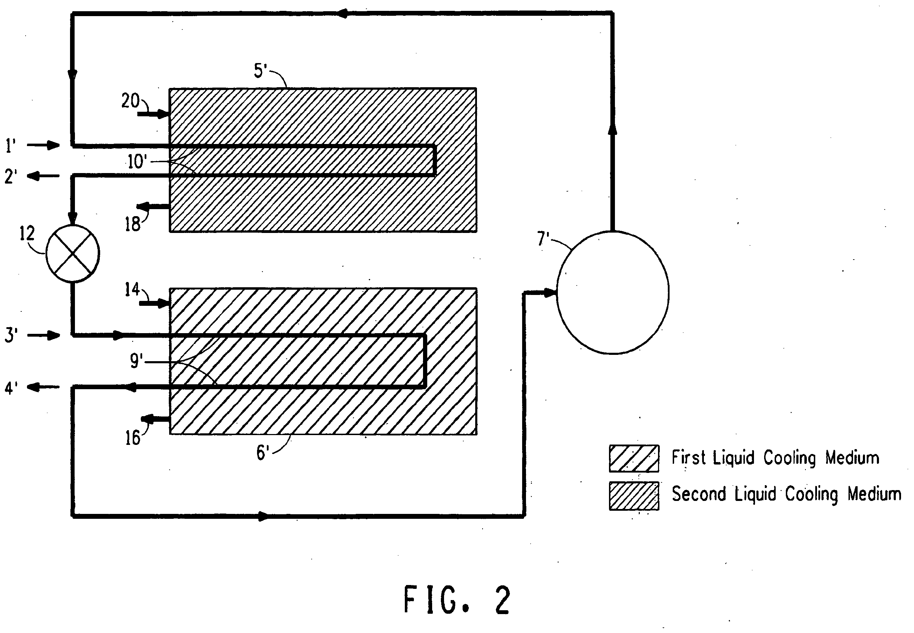

According to the invention, the cis-HFO-1336mzz may be used as a refrigerant in a centrifugalchiller. A chiller is a type of air conditioning/refrigeration apparatus. The present disclosure is directed to a vapor compression chiller. Such vapor compression chillers may be either a flooded evaporator chiller, which is shown in Figure 1, or a direct expansion chiller, which is shown in Figure 2. Both a flooded evaporator chiller and a direct expansion chiller may be air-cooled or water-cooled. In the embodiment where chillers are water cooled, such chillers are generally associated with cooling towers for heat rejection from the system. In the embodiment where chillers are air-cooled, the chillers are equipped with refrigerant-to-air finned-tube condenser coils and fans to reject heat from the system. Air-cooled chiller systems are generally less costly than equivalent-capacity water-cooled chiller systems including cooling tower and water pump. However, water-cooled systems can be more efficient under many operating conditions due to lower condensing temperatures.

Chillers, including both flooded evaporator and direct expansion chillers, may be coupled with an air handling and distribution system to provide comfort air conditioning (cooling and dehumidifying the air) to large commercial buildings, including hotels, office buildings, hospitals, universities and the like. In another embodiment, chillers, most likely air-cooled direct expansion chillers, have found additional utility in naval submarines and surface vessels.

To illustrate how chillers operate, reference is made to the Figures. A water-cooled, flooded evaporator chiller is shown illustrated in Figure 1. In this chiller a first cooling medium, which is a warm liquid, which comprises water, and, in some embodiments, additives, such as a glycol (e.g., ethylene glycol or propylene glycol), enters the chiller from a cooling system, such as a building cooling system, shown entering at arrow 3, through a coil or tube bundle 9, in an evaporator 6, which has an inlet and an outlet. The warm first cooling medium is delivered to the evaporator, where it is cooled by liquid refrigerant, which is shown in the lower portion of the evaporator. The liquid refrigerant evaporates at a lower temperature than the warm first cooling medium which flows through coil or tube bundle 9. The cooled first cooling medium re-circulates back to the building cooling system, as shown by arrow 4, via a return portion of coilor tube bundle 9. The liquid refrigerant, shown in the lower portion of evaporator 6 in Figure 1, vaporizes and is drawn into a compressor 7, which increases the pressure and temperature of the refrigerant vapor. The compressor compresses this vapor so that it may be condensed in a condenser 5 at a higher pressure and temperature than the pressure and temperature of the refrigerant vapor when it comes out of the evaporator. A second cooling medium, which is a liquid in the case of a water-cooled chiller, enters the condenser via a coil (or tube bundle)10 in condenser 5 from a cooling tower at arrow 1 in Figure 1. The second cooling medium is warmed in the process and returned via a return loop of coil (or tube bundle) 10 and arrow 2 to a cooling tower or to the environment. This second cooling medium cools the vapor in the condenser and causes the vapor to condense to liquid refrigerant, so that there is liquid refrigerant in the lower portion of the condenser as shown in Figure 1. The condensed liquid refrigerant in the condenser flows back to the evaporator through an expansion device 8, which may be an orifice, capillary tube or expansion valve. Expansion device 8 reduces the pressure of the liquid refrigerant, and converts the liquid refrigerant partially to vapor, that is to say that the liquid refrigerant flashes as pressure drops between the condenser and the evaporator. Flashing cools the refrigerant, i.e., both the liquid refrigerant and the refrigerant vapor to the saturated temperature at evaporator pressure, so that both liquid refrigerant and refrigerant vapor are present in the evaporator.

It should be noted that for a single component refrigerant composition, such as cis-HFO-1336mzz, the composition of the vapor refrigerant in the evaporator is the same as the composition of the liquid refrigerant in the evaporator. In this case, evaporation will occur at a constant temperature. However, if a non-azeotropic refrigerant blend is used, the liquid refrigerant and the refrigerant vapor in the evaporator (or in the condenser) may have different compositions. This may lead to inefficient systems and difficulties in servicing the equipment, thus a single component refrigerant is more desirable than a non-azeotropic refrigerant blend.

Chillers with cooling capacities above 700 kW generally employ flooded evaporators, where the refrigerant in the evaporator and the condenser surrounds a coil or other conduit for the cooling medium (i.e., the refrigerant is on the shell side). Flooded evaporators require higher charges of refrigerant, but permit closer approach temperatures and higher efficiencies. Chillers with capacities below 700 kW commonly employ evaporators with refrigerant flowing inside the tubes and cooling medium in the evaporator and the condenser surrounding the tubes, i.e., the cooling medium is on the shell side. Such chillers are called direct-expansion (DX) chillers. A water-cooled direct expansion chiller is illustrated in Figure 2. In the chiller as illustrated in Figure 2, first liquid cooling medium, which is a warm liquid, such as warm water, enters an evaporator 6' at inlet 14. Mostly liquid refrigerant (with a small amount of refrigerant vapor) enters a coil (or tube bundle) 9' in the evaporator at arrow 3' and evaporates, turning to vapor. As a result, first liquid cooling medium is cooled in the evaporator, and a cooled first liquid cooling medium exits the evaporator at outlet 16, and is sent to a body to be cooled, such as a building. In this embodiment of Figure 2, it is this cooled first liquid cooling medium that cools the building or other body to be cooled. The refrigerant vapor exits the evaporator at arrow 4' and is sent to a compressor 7', where it is compressed and exits as high temperature, high pressure refrigerant vapor. This refrigerant vapor enters a condenser 5' through a condenser coil 10' at 1'. The refrigerant vapor is cooled by a second liquid cooling medium, such as water, in the condenser and becomes a liquid. The second liquid cooling medium enters the condenser through a condenser cooling medium inlet 20. The second liquid cooling medium extracts heat from the condensing refrigerant vapor, which becomes liquid refrigerant, and this warms the second liquid cooling medium in the condenser. The second liquid cooling medium exits through the condenser through the condenser cooling medium outlet 18. The condensed refrigerant liquid exits the condenser through lower coil (or tube bundle) 10' as shown in Figure 2 and flows through an expansion device 12, which may be an orifice, capillary tube or expansion valve. Expansion device 12 reduces the pressure of the liquid refrigerant. A small amount of vapor, produced as a result of the expansion, enters the evaporator with liquid refrigerant through coil 9' and the cycle repeats. Direct expansion chillers may also be air-cooled.

Vapor-compression chillers may be identified by the type of compressor they employ. According to the invention, the cis-HFO-1336mzz is useful in centrifugal chillers, which utilize centrifugal compressors, as will be described below.

In one embodiment is provided a centrifugal chiller containing cis-1,1,1,4,4,4-hexafluoro-2-butene. A centrifugal compressor uses rotating elements to accelerate the refrigerant vapor radially, and typically includes an impeller and diffuser housed in a casing. Centrifugal compressors usually take fluid in at an impeller eye, or central inlet of a rotating impeller, and accelerate it radially outward. Some static pressure rise occurs in the impeller section, but most of the pressure rise occurs in the diffuser section of the casing, where momentum is converted to static pressure. Each impeller-diffuser set is a stage of the compressor. Centrifugal compressors are built with from 1 to 12 or more stages, depending on the final pressure desired and the volume of refrigerant to be handled.

The pressure ratio, or compression ratio, of a compressor is the ratio of absolute discharge pressure to the absolute inlet pressure. Pressure delivered by a centrifugal compressor is practically constant over a relatively wide range of capacities. The pressure a centrifugal compressor can develop depends on the tip speed of the impeller. Tip speed is the speed of the impeller measured at its tip and is related to the diameter of the impeller and its revolutions per minute. The capacity of the centrifugal compressor is determined by the size of the passages through the impeller section. This makes the size of the compressor more dependent on the pressure required than the capacity. Of note is the use of cis-HFO-1336mzz in large centrifugal chillers, i.e., centrifugal chillers having a cooling capacity of about 100 refrigeration tons (RTs) or more. Examples include centrifugal chillers having cooling capacity of from about 500 to 3000 RTs (e.g., 1000 RTs).

### Methods

In one embodiment, a method to produce cooling comprises evaporating a refrigerant consisting of cis-HFO-1336mzz in the vicinity of a body to be cooled, compressing said cis-HFO-1336mzz in a centrifugal compressor, and thereafter condensing said cis-HFO-1336mzz.

In one embodiment, a method to produce cooling comprises evaporating a refrigerant consisting of cis-HFO-1336mzz in the vicinity of a cooling medium; compressing said cis-HFO-1336mzz; and thereafter condensing said cis-HFO-1336mzz.

In one embodiment, a method to produce cooling comprises evaporating a refrigerant consisting of cis-HFO-1336mzz liquid to produce cis-HFO-1336mzz vapor in the vicinity of a body to be cooled; compressing said cis-HFO-1336mzz vapor to produce higher pressure cis-HFO-1336mzz vapor; and thereafter condensing said higher pressure cis-HFO-1336mzz vapor to produce cis-HFO-1336mzz liquid, wherein said compressing is accomplished in a compressor which is a centrifugal compressor. In one embodiment, a body to be cooled may be any space, object or fluid that may be cooled. In one embodiment, a body to be cooled may be a room, building, passenger compartment of an automobile, refrigerator, freezer, or supermarket or convenience store display case. Alternatively, in another embodiment, a body to be cooled may be a cooling medium or heat transfer fluid.

In one embodiment, the method for producing cooling comprises producing cooling in a flooded evaporator chiller as described above with respect to Figure 1. In this method, cis-HFO-1336mzz is evaporated to form a refrigerant vapor in the vicinity of a first cooling medium. The cooling medium is a warm liquid, such as water, which is transported into the evaporator via a pipe from a cooling system. The warm liquid is cooled and is passed to a body to be cooled, such as a building. The refrigerant vapor is then condensed in the vicinity of a second cooling medium, which is a chilled liquid which is brought in from, for instance, a cooling tower. The second cooling medium cools the refrigerant vapor such that it is condensed to form a liquid refrigerant. In this method, a flooded evaporator chiller may also be used to cool hotels, office buildings, hospitals and universities.

In another embodiment, the method for producing cooling comprises producing cooling in a direct expansion chiller as described above with respect to Figure 2. In this method, a refrigerant consisting of cis-HFO-1336mzz is passed through an evaporator and evaporates to produce a refrigerant vapor. A first liquid cooling medium is cooled by the evaporating refrigerant. The first liquid cooling medium is passed out of the evaporator to a body to be cooled. In this method, the direct expansion chiller may also be used to cool hotels, office buildings, hospitals, universities, as well as naval submarines or naval surface vessels.

Refrigerants and heat transfer fluids that are in need of replacement, based upon GWP calculations published by the Intergovernmental Panel on Climate Change (IPCC), include but are not limited to HCFC-123. Therefore, in accordance with the present invention, there is provided a method for replacing HCFC-123 in a centrifugal flooded evaporator chiller or a direct expansion chiller. The method comprises providing a refrigerant consisting of cis-HFO-1336mzz to a flooded evaporator chiller or direct expansion chiller in place of HCFC-123.

In this method of replacing HCFC-123, cis-HFO-1336mzz is useful in centrifugal chillers that may have been originally designed and manufactured to operate with HCFC-123. Another refrigerant in need of replacement due to ODP (ODP=1) and GWP (GWP=4750) is CFC-11. HCFC-123 was originally used in chillers as a replacement for CFC-11. But CFC-11 may still be in use in certain areas of the world. Therefore, in accordance with the present invention, there is provided a method for replacing CFC-11 in a flooded evaporator chiller or a direct expansion chiller. The method comprises providing a refrigerant consisting of cis-HFO-1336mzz to a centrifugal flooded evaporator chiller or direct expansion chiller in place of CFC-11.

In this method of replacing CFC-11, cis-HFO-1336mzz is useful in centrifugal chillers that may have been originally designed and manufactured to operate with CFC-11. Alternatively, in this method of replacing HCFC-123 or CFC-11, cis-HFO-1336mzz as disclosed herein may be useful in new equipment, such as a new flooded evaporator chiller or a new direct expansion chiller. In such new equipment, either a centrifugal compressor or a positive displacement compressor, such as a screw compressor, and the heat exchangers used therewith, may be used.

In one embodiment, in accordance with the present invention, there is provided use of a refrigerant consisting of cis-HFO-1336mzz in a centrifugal chiller apparatus. Use of cis-HFO-1336mzz in chiller apparatus may provide comfort air conditioning (cooling and dehumidifying the air) to large commercial buildings, including hotels, office buildings, hospitals, universities and the like, as well as submarines and naval surface vessels

### EXAMPLES

### EXAMPLE 1

### Cooling Performance for cis-HFO-1336mzz In a centrifugal chiller

The performance of cis-HFO-1336mzz in a centrifugal chiller is determined and compared to performance for HCFC-123. The data are shown in Table 1.

This Example assumes that an air conditioning application requires nominally 3,517 kJ/s (1,000 RT) of cooling. The evaporator temperature is to be kept at an average value of 4.44 °C (40 °F) to satisfy the requirements for building chilled water. The available cooling water to the condenser is to maintain an average condenser temperature of 37.78 °C (100 °F).

The requirements of the above application are met by a centrifugal chiller operating with HCFC-123 as the refrigerant. If no liquid subcooling and no vapor superheat are to be employed by such a chiller, the chiller performance approximates the performance summarized in Table 1 under column "HCFC-123." An isentropic coefficient of performance of 7.36 is achieved. For a reasonable compressor isentropic efficiency of 0.70, the compressor must have the capacity to circulate a refrigerant volumetric flow rate of 8.93 m³/sec (determined at conditions prevailing at the compressor inlet) corresponding to a volumetric capacity of 393.74 kJ/m³. A reasonable compressor design with a work coefficient of 0.55 (as recommended by the 2008 ASHRAE Handbook-HVAC Systems and Equipment pg 37.31) requires an impeller tip speed of 190.28 m/s to provide the compression work to the refrigerant vapor needed to lift the refrigerant vapor from evaporator conditions to condenser conditions. Then, if an impeller flow coefficient of 0.25 is assumed, the impeller must have a diameter of 0.762 m (2.5 ft) and rotate at 79.49 revolutions per second (4,769.67 revolutions per minute) to provide both the required lift and the required refrigerant volumetric flow rate.

The performance of the proposed refrigerant, cis-HFO-1336mzz, in the above application is also summarized in Table 1. The new refrigerant is capable of meeting the cooling duty of the application with a slightly lower (1.35%) coefficient of performance (COP or energy efficiency). Because of the lower volumetric cooling capacity of cis-HFO-1336mzz relative to that of HCFC-123, a new compressor designed to operate with the new refrigerant has an impeller diameter larger than that of the HCFC-123 compressor by about 13.4% (assuming the same work and flow coefficients).

**TABLE 1**

| | **HCFC-123** | **cis-HFO-1336mzz** | **cis-HFO-1336mz Relative to HCFC-123 (%)** |
|---|---|---|---|
| Cooling rate (kJ/s) | 3,517 | 3,517 | 100 |
| COP | 7.36 | 7.26 | 98.6 |
| Volumetric Capacity (kJ/m³) | 394 | 311 | 78.9 |
| Compressor impeller tip speed (m/s) | 190 | 187 | 98.4 |
| Impeller diameter (m) | 0.762 | 0.864 | 113.4 |
| GWP* | 77 | <10 | |
| ODP** | 0.02 | 0 | |

| | | | |
|---|---|---|---|
| *GWP value for HCFC-123 at 100 year time horizon as reported in the IPCC Fourth Assessment Report (2007). GWP value for cis-HFO-1336mzz estimated from atmospheric lifetime predictions. **ODP value for HCFC-123 is reported in the "The Scientific Assessment of Ozone Depletion, 2002, A report of the World Meteorological Association's Global Ozone Research and Monitoring Project," page 1.30, Table 1-5 as determined with updated lifetimes (see footnote b). | | | |

The data in Table 1 indicate that cis-HFO-1336mzz provides similar energy efficiency (COP) to that of HCFC-123. By increasing the size of the impeller and cis-HFO-1336mzz circulation rate, the required nominal cooling rate is achieved despite the lower volumetric cooling capacity of the cis-HFO-1336mzz relative to HCFC-123. In some cases, a retrofit of an existing centrifugal chiller designed for HCFC-123 could be possible using cis-HFO-1336mzz by only replacing the impeller with one of larger diameter. In other cases additional changes would be required such as adjustments to inlet vanes or to the impeller rotational speed so as to meet both the impeller tip speed required to lift the refrigerant from evaporator to condenser conditions and the refrigerant circulation rate required to achieve the required cooling rate.

### EXAMPLE 2

### Retrofit of a chiller using HCFC-123

This Example describes a retrofit scenario (Table 2), where cis-HFO-1336mzz replaces HCFC-123 in a chiller originally designed for HCFC-123. In this Example, the impeller rotational speed is reduced by 1.48 %, from 79.49 rps to 78.32 rps, when using HFO-1336mzz instead of HCFC-123, to achieve the impeller tip speed of 187.46 m/s required to lift the new refrigerant from evaporator to condenser conditions. The required reduction in impeller rotational speed is achieved by adjusting the gears in the impeller drive box or by adjusting the motor operating frequency. It is reasonable to assume that the impeller flow coefficient under retrofit conditions remains approximately equal to its value for the original HCFC-123 design. Then the existing impeller, with a diameter of 0.762 m, rotating at the new speed of 78.32 revolutions per second (rps) provides a refrigerant vapor volumetric flow rate of 8.80 m³/sec. This refrigerant flow rate provides a cooling rate of 2,735.37 kJ/s (777.76 RT) or 22.22 % lower than the cooling rate nominally required.

**TABLE 2**

| | **HCFC-123** | **Cis-HFO-1336mzz** | **Relative to HCFC-123 (%)** |
|---|---|---|---|
| Cooling rate (kJ/s) | 3,517 | 2,735 | 77.8 |
| COP | 7.36 | 7.26 | 98.6 |
| Volumetric Capacity (kJ/m³) | 394 | 311 | 78.9 |
| Compressor impeller tip speed (m/s) | 190 | 187 | 98.4 |
| Impeller diameter (m) | 0.762 | 0.762 | 100 |
| Impeller rotational speed (rps) | 79.5 | 78.3 | 98.5 |

The data in Table 2 indicate that a retrofit of an existing centrifugal chiller designed for HCFC-123 is possible using cis-HFO-1336mzz and slightly adjusting the impeller rotational speed to meet the required evaporator and condenser temperatures. While the achievable cooling rate falls short of matching the cooling rate for HCFC-123, this must be weighed against the other desirable properties of cis-HFO-1336mzz such as energy efficiency, GWP, ODP and lack of flammability. In some applications, the loss of cooling rate may be acceptable (e.g., when the nominal chiller cooling rate is higher than that actually needed) or may be compensated by supplying additional cooling rate by other means (e.g., additional chilled water from other chillers) or by reducing the cooling load.

### EXAMPLE 3

### Non-Flammability Testing

Lack of flammability of cis-HFO-1336mzz is determined according to the ASTM E681- 2001 test procedure as required in ASHRAE Standard 34-2007 and described in Addendum p to ASHRAE Standard 34-2007. Test conditions were 60°C and 100°C, with 50% relative humidity as prepared at 23°C.

Cis-HFO-1336mzz was found to be nonflammable at 60°C and 100°C. This shows another property of importance to the air conditioning and refrigeration industries. Non-flammable refrigerants are required by many applications. Thus the nonflammable rating of cis-HFO-1336mzz will allow broad use of cis-HFO-1336mzz.

## Claims

1. A centrifugal chiller apparatus containing a refrigerant consisting of cis-HFO-1336mzz.

2. The apparatus of claim 1 wherein said chiller is a flooded evaporator chiller.

3. The apparatus of claim 1 wherein said chiller is a direct expansion chiller.

4. A method for producing cooling in the centrifugal chiller apparatus of claim 1, wherein the chiller apparatus comprises an evaporator, comprising:
passing a cooling medium through the evaporator;
evaporating the refrigerant consisting of cis-HFO-1336mzz in the evaporator,
to form a vapor, thereby cooling the cooling medium; and
passing the cooling medium out of the evaporator to a body to be cooled.

5. The method of claim 4 wherein the centrifugal chiller has a cooling capacity of about 1000 RTs.

6. A method for producing cooling, comprising:
evaporating a refrigerant consisting of cis-HFO-1336mzz in the vicinity of a body to be cooled;
compressing said cis-HFO-1336mzz in a centrifugal compressor comprised within a chiller apparatus; and
thereafter condensing said cis-HFO-1336mzz.

7. The method of claim 6, wherein liquid cis-HFO-1336mzz is evaporated to produce cis-HFO-1336mzz vapor in the vicinity of a body to be cooled; wherein the cis-HFO-1336mzz vapor produced by the evaporation is compressed to produce a vapor having higher pressure using a centrifugal compressor; and wherein said higher pressure cis-HFO-1336mzz vapor is condensed to produce cis-HFO-1336mzz liquid.

8. A method for replacing refrigerant selected from the group consisting of CFC-11 and HCFC-123 in a chiller, wherein said centrifugal chiller comprises a centrifugal compressor, said method comprising:
providing a refrigerant consisting of cis-HFO-1336mzz to said chiller in place of said refrigerant.

9. The method of claim 8, wherein said refrigerant is HCFC-123.

10. The method of claim 8, wherein said chiller is a flooded evaporator chiller.

11. The method of claim 8, wherein said chiller is a direct expansion chiller.

12. Use of a refrigerant essentially consisting of cis-HFO-1336mzz in a centrifugal chiller apparatus.

## Patentansprüche

1. Zentrifugalkühlvorrichtung enthaltend ein Kühlmittel, das aus cis-HFO-1336mzz besteht.

2. Vorrichtung nach Anspruch 1, wobei der Kühler ein befluteter Verdampferkühler ist.

3. Vorrichtung nach Anspruch 1, wobei der Kühler ein Direktexpansionskühler ist.

4. Verfahren zum Erzeugen von Kühlung in der Zentrifugalkühlvorrichtung nach Anspruch 1, wobei die Kühlvorrichtung einen Verdampfer umfasst, umfassend:
das Hindurchführen eines Kühlmediums durch den Verdampfer;
das Verdampfen des Kühlmittels, das aus cis-HFO-1336mzz besteht, im Verdampfer, um einen Dampf zu bilden, wodurch das Kühlmedium gekühlt wird; und
das Führen des Kühlmediums aus dem Verdampfer zu einem zu kühlenden Körper.

5. Verfahren nach Anspruch 4, wobei der Zentrifugalkühler eine Kühlleistung von etwa 1000 Kältemitteltonnen (RT) aufweist.

6. Verfahren zum Erzeugen von Kühlung, umfassend:
das Verdampfen eines Kühlmittels, das aus cis-HFO-1336mzz besteht, in der Nähe eines zu kühlenden Körpers,
das Verdichten des cis-HFO-1336mzz in einem Zentrifugalverdichter, der sich innerhalb einer Kühlvorrichtung befindet; und
daraufhin das Kondensieren des cis-HFO-1336mzz.

7. Verfahren nach Anspruch 6, wobei flüssiges cis-HFO-1336mzz verdampft wird, um cis-HFO-1336mzz-Dampf in der Nähe eines zu kühlenden Körpers herzustellen; wobei der cis-HFO-1336mzz-Dampf, der durch das Verdampfen hergestellt wird, verdichtet wird, um einen Dampf, der einen höheren Druck aufweist, unter Anwendung eines Zentrifugalverdichters herzustellen; und wobei der cis-HFO-1336mzz-Dampf von höherem Druck kondensiert wird, um cis-HFO-1336mzz-Flüssigkeit herzustellen.

8. Verfahren zum Ersetzen von Kühlmittel ausgewählt aus der Gruppe bestehend aus CFC-11 und HCFC-123 in einem Kühler, wobei der Zentrifugalkühler einen Zentrifugalverdichter umfasst, wobei das Verfahren Folgendes umfasst:
das Bereitstellen eines Kühlmittels, das aus cis-HFO-1336mzz besteht, für den Kühler statt des Kühlmittels.

9. Verfahren nach Anspruch 8, wobei das Kühlmittel HCFC-123 ist.

10. Verfahren nach Anspruch 8, wobei der Kühler ein befluteter Verdampferkühler ist.

11. Verfahren nach Anspruch 8, wobei der Kühler ein Direktexpansionskühler ist.

12. Verwendung eines Kühlmittels, das im Wesentlichen aus cis-HFO-1336mzz besteht, in einer Zentrifugalkühlervorrichtung.

## Revendications

1. Appareil réfrigérant centrifuge contenant un réfrigérant consistant en cis-HFO-1336mzz.

2. Appareil selon la revendication 1, dans lequel ledit réfrigérant est un refroidisseur à évaporateur noyé.

3. Appareil selon la revendication 1, dans lequel ledit refroidisseur est un refroidisseur à détente directe.

4. Procédé pour produire un refroidissement dans l'appareil réfrigérant centrifuge selon la revendication 1, dans lequel l'appareil réfrigérant comprend un évaporateur, comprenant:
le passage d'un milieu de refroidissement à travers l'évaporateur;
l'évaporation du réfrigérant consistant en cis-HFO-1336mzz dans l'évaporateur, pour former une vapeur, refroidissant de ce fait le milieu de refroidissement; et
le passage du milieu de refroidissement hors de l'évaporateur jusqu'à un corps à refroidir.

5. Procédé selon la revendication 4, dans lequel le refroidisseur centrifuge a une puissance frigorifique d'environ 1000 TR.

6. Procédé pour produire un refroidissement, comprenant:
l'évaporation d'un réfrigérant consistant en cis-HFO-1336mzz dans le voisinage d'un corps à refroidir;
la compression dudit cis-HFO-1336mzz dans un compresseur centrifuge compris dans un appareil de réfrigération; et
ensuite, la condensation dudit cis-HFO-1336mzz.

7. Procédé selon la revendication 6, dans lequel du cis-HFO-1336mzz liquide est évaporé pour produire une vapeur de cis-HFO-1336mzz dans le voisinage d'un corps à refroidir; dans lequel la vapeur de cis-HFO-1336mzz produite par l'évaporation est comprimée pour produire une vapeur ayant une pression plus élevée en utilisant un compresseur centrifuge; et dans lequel ladite vapeur de cis-HFO-1336mzz de plus haute pression est condensée pour produire un liquide de cis-HFO-1336mzz.

8. Procédé pour remplacer un réfrigérant choisi dans le groupe constitué par le CFC-11 et le HCFC-123 dans un refroidisseur, dans lequel ledit refroidisseur centrifuge comprend un compresseur centrifuge, ledit procédé comprenant:
la fourniture d'un réfrigérant consistant en cis-HFO-1336mzz audit refroidisseur à la place dudit réfrigérant.

9. Procédé selon la revendication 8, dans lequel ledit réfrigérant est le HCFC-123.

10. Procédé selon la revendication 8, dans lequel ledit refroidisseur est un refroidisseur à évaporateur noyé.

11. Procédé selon la revendication 8, dans lequel ledit refroidisseur est un refroidisseur à détente directe.

12. Utilisation d'un réfrigérant consistant essentiellement en cis-HFO-1336mzz dans un appareil réfrigérant centrifuge.
